# EUROPEAN PATENT SPECIFICATION

(11) **EP 3 106 350 B1**
(45) Date of publication and mention of the grant of the patent: **03.10.2018**
(21) Application number: 15876393.8
(22) Date of filing: 06.11.2015
(51) Int. Cl.: B60R 7/02, B65D 21/02

(54) **MODULAR CONTAINER ASSEMBLY FOR RECEIVING ITEMS IN THE LUGGAGE COMPARTMENT OF A MOTOR CAR**
MODULARE BEHÄLTERANORDNUNG ZUM AUFNAHME VON GEGENSTÄNDEN IM GEPÄCKRAUM EINES KRAFTFAHRZEUGS
UNITÉ DE RÉCIPIENTS COMPOSÉE DESTINÉE À ACCUEILLIR DES OBJETS DANS LE COFFRE D'UNE VOITURE

(30) Priority: 10.03.2015 RU 2015108121
(43) Date of publication of application: 21.12.2016
(73) Proprietor: Milyavsky, Dmitry Konstantinovich, RU-Saratov 410069 (RU)
(72) Inventor: MILYAVSKAYA, Julia Alekseevna, RU-g. Saratov 410069 (RU); POPLAVSKY, Dmitry Victorovich, RU-g. Saratov 410041 (RU)
(74) Representative: Lapienis, Juozas
(86) International application number: PCT/RU2015/000745
(87) International publication number: WO 2016/144205

(56) References cited:
- DE-U1-202012 012 074
- GB-A- 2 204 566
- RU-U1- 54 873
- US-A- 4 226 348
- US-A- 5 161 700
- US-A- 5 167 363

## Description

### Background of Invention

The invention relates to vehicles, in particular to devices for laying, holding and storing pieces of luggage in a car boot.

### Prior Art

It is known a composed container unit for placing pieces of luggage in a car boot, comprising a housing, including a bottom, side walls, a cover and a means for securing to the car boot (RF Patent RU138375, IPC B60R 7/02, published on March 10, 2014). This technical solution is the closest one to the invention according to its technical substance and the achieved effect. GB2204566 discloses a container having the technical features of the preamble of appended claim 1.

The prior art drawback lies in its limited operational functionality.

### Description of Invention

The technical effect of the solution as claimed consists in extended operational functionality and increased application flexibility.

The following are general and specific features characterizing the causal relationship of the invention with the specified technical effect.

A composed container unit for placing pieces of luggage in a car boot, comprising a housing, including a bottom, side walls, a cover and a means for securing to the car boot. The housing is made composed of different size containers in the form of open-topped parallelepipeds releasably interconnected across and/or along the car axis. Each container side walls are supplied with the means for securing provided in groups of at least two guiding locks, attached to the container side walls and performed as projections in the shape of a truncated tetrahedral pyramid, with one face adjacent to the corresponding wall and making a right angle with the base located in the container bottom area. Each group of guiding locks relating to each container wall is shifted to one side from the adjacent vertical plane, extending across the container corresponding horizontal axis of symmetry. Said truncated pyramid base represents an isosceles trapezoid, oriented with its minor base to the opposite side wall and with its major base outside the container. The means for securing containers are placed in order to provide optional engagement of different size containers therebetween by each pyramid side faces adapted to be engaged with corresponding side faces of the adjacent container pyramids. A means for securing the container unit to a car boot is performed in the form of two pads, spaced apart on the opposite side walls of the boot and attached thereto. On the free side of each pad at least a pair of guide locks similar to the locks placed on the container side walls are provided adapted for securing the end containers of the unit with said pads. The guiding locks may be shifted from the container symmetry axis along its side walls clockwise or shifted from the container symmetry axis along its side walls counter-clockwise. The side faces of the guiding locks are performed in the form of planes. The housing may be made of plastic or carpet flooring or textured material.

### Drawings

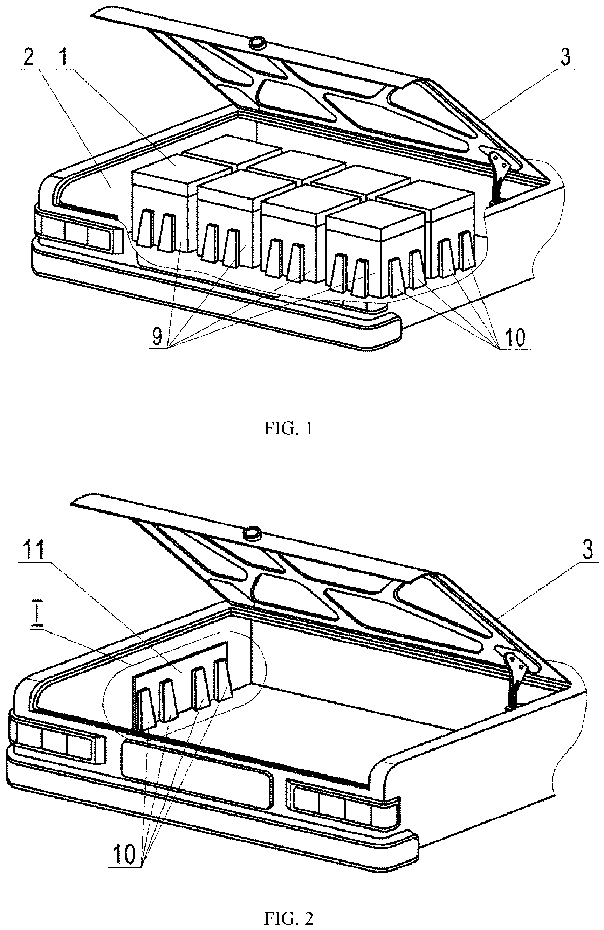

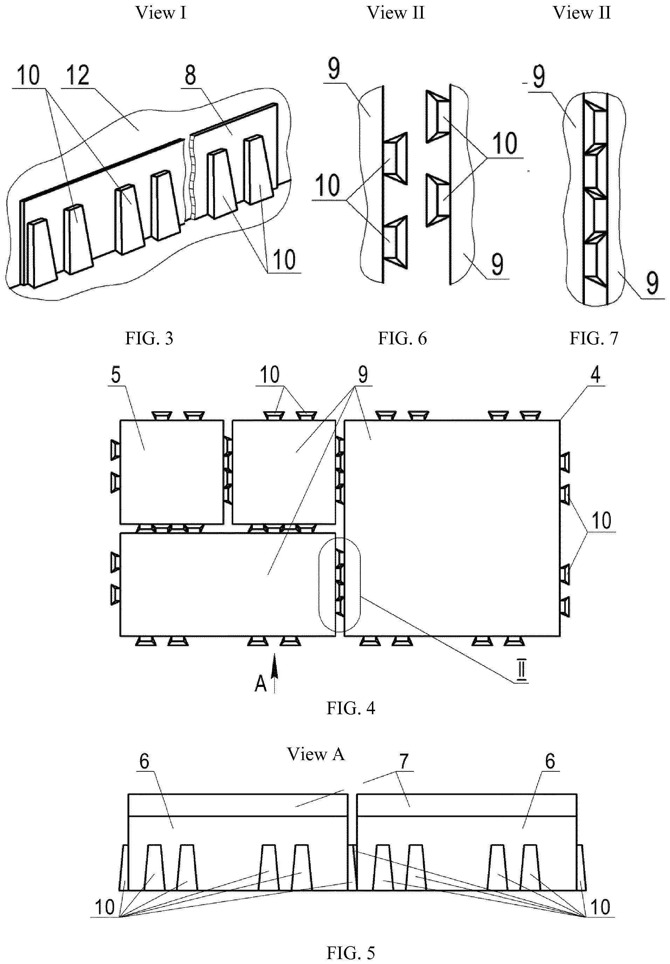

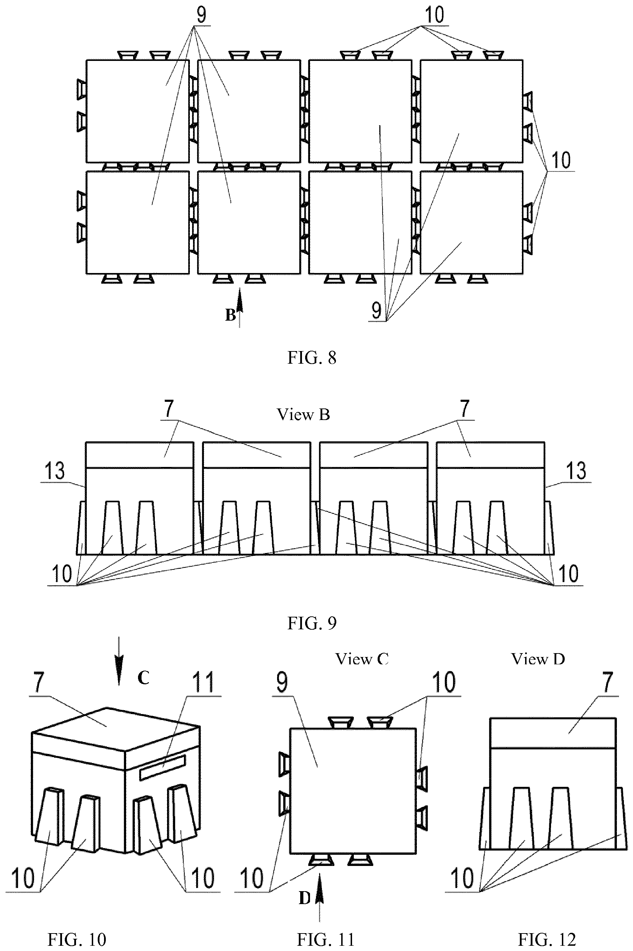

The device is illustrated with drawings wherein: Fig. 1 shows an isometric projection of a boot equipped with a composed container unit; Fig. 2 shows the boot with a means for securing; Fig. 3 demonstrates view I of Fig. 2; Fig. 4 shows a variant of the container unit construction; Fig. 5 demonstrates view A of Fig. 4; Fig. 6 demonstrates view II of Fig. 5 according to an embodiment; Fig. 7 is the same of Fig. 6 according to an embodiment; Fig. 8 shows an embodiment of the container unit; Fig. 9 demonstrates view B of Fig. 8, representing an isometric projection of a container unit module; Fig. 11 demonstrates view C of Fig. 10; Fig. 12 shows a side view of Fig. 11.

### Embodiments of Invention

A composed container unit 1 for placing pieces of luggage in a boot 2 of a car 3, comprising a housing 4, including a bottom 5, side walls 6, a cover 7 and a means 8 for securing to the boot 2 of a car 3.

The housing 4 is made composed of different size containers 9 in the form of open-topped parallelepipeds releasably interconnected across and/or along the car 3 axis.

Each container 9 side walls 6 are supplied with the means for securing provided in groups of at least two guiding locks 10, attached to the container 9 side walls 6 and performed as projections in the shape of a truncated tetrahedral pyramid, with one face adjacent to the corresponding wall and making a right angle with the base located in the container bottom area.

Each group of guiding locks 10 relating to each container 9 side wall 6 is shifted to one side from the adjacent vertical plane, extending across the container 9 corresponding horizontal axis of symmetry.

Said truncated pyramid base represents an isosceles trapezoid, oriented with its minor base to the opposite side wall 6 and with its major base outside the container 9.

The means for securing containers 9 are placed in order to provide optional engagement of different size containers 9 therebetween by each pyramid side faces 6 adapted to be engaged with corresponding side faces of the adjacent container 9 pyramids.

A means for securing the container unit 1 to a boot 2 of a car 3 is performed in the form of two pads 11, spaced apart on the opposite side walls 12 of the boot 2 and attached thereto.

On the free side of each pad 11 at least a pair of guide locks 10 similar to the locks 10 placed on the container 9 side walls 8 are provided adapted for securing the end containers 13 of the container unit 1 with said pads 11.

The guiding locks 10 may be shifted from the container 9 symmetry axis along its side walls 6 clockwise or shifted from the container 9 symmetry axis along its side walls 6 counter-clockwise.

The side faces 6 of the guiding locks 10 are performed in the form of planes.

The housing 4 may be made of plastic or carpet flooring or textured material.

Comparison of the technical solution as claimed to the prior art known from the scientific, technical and patent documentation on the priority date of the main heading and the related ones has revealed no means exhibiting features identical to all the features contained in the claims of the invention suggested by the Applicant, including the purpose characteristic.

That is, the set of essential features of the solution as claimed has not been previously known and is not identical to any known technical solutions, therefore, it satisfies such a condition of patentability as "novelty".

### Industrial Applicability

This technical solution is industrially applicable, as its purpose is specified in the description of the application and in the title of the invention, it can be manufactured and used when placing pieces of luggage in a car boot.

The technical solution is efficient, feasible and reproducible, and features of the device make it possible to obtain the specified technical effect consisting in extended operational functionality and increased application flexibility, i.e. they are essential.

The device in the form as it is described in each of the claims may be implemented by means and methods described in the prior art, that has become accessible to the public before the priority date of the invention.

Therefore, the technical solution as claimed satisfies such a condition of patentability as "industrial applicability".

The device operates as follows.

Depending on the required amount and dimensions 2 of the pieces of luggage to be placed in the boot 2, containers 9 are selected for the container unit 1 in order to make the end ones 13 be attached to the boot 2 by means of the pads 11.

The containers 9 are firmly secured to each other though simple engagement by means of the guiding locks 10.

The use of the invention allows for extended operational functionality due to the use of different size containers and their either one-tier or two-tier arrangement as well as for increased application flexibility.

## Claims

1. A composed container unit for placing pieces of luggage in a car boot, comprising a housing, including a bottom, side walls, a cover and a means for securing to the car boot, wherein the housing is composed of containers (9) in the form of open-topped parallelepipeds releasably interconnected across and/or along the car axis, wherein each container side walls are supplied with means for securing provided in groups of at least two guiding locks attached to the container side walls and performed as projections (10) in the shape of a truncated tetrahedral pyramid with one face adjacent to the corresponding wall and making a right angle with the base located in the container bottom area, wherein each group of guiding locks relating to each container side wall is shifted to one side from the adjacent vertical plane, extending across the container corresponding horizontal axis of symmetry, wherein said truncated pyramid base represents an isosceles trapezoid, oriented with its minor base to the opposite side wall and with its major base outside the container, wherein the means for securing containers are placed in order to provide optional engagement of containers through said means by each pyramid side faces adapted to be engaged with corresponding side faces of the adjacent container pyramids, **characterised in that** the housing is composed of containers of different sizes, and **in that** a means for securing the container unit to a car boot is performed in the form of two pads (11), spaced apart on the opposite side walls of the boot and attached thereto, wherein on the free side of each pad at least a pair of guide locks (10) similar to the locks placed on the container side walls are provided adapted for securing the end containers of the unit with said pads.

2. A composed container unit of claim 1, **characterized in that** the guiding locks are shifted from the container symmetry axis along its side walls clockwise when the container is seen from above.

3. A composed container unit of claim 1, **characterized in that** the guiding locks are shifted from the container symmetry axis along its side walls counter-clockwise when the container is seen from above.

4. A composed container unit of claim 1, **characterized in that** the side faces of the guiding locks are performed in the form of planes.

5. A composed container unit of claim 1, **characterized in that** the housing is made of plastic.

6. A composed container unit of claim 1, **characterized in that** the housing is made of carpet flooring.

7. A composed container unit of claim 1, **characterized in that** the housing is made of textured material.

## Patentansprüche

1. Eine geteilte Behältereinheit zum Einlegen von Gepäckstücken in einen Kofferraum, umfassend ein Gehäuse, umfassend einen Boden, Seitenwände, eine Klappe und eine Einrichtung zum Befestigen an dem Kofferraum, wobei das Gehäuse aus Behältern als oben offene Parallelepipede, die lösbar über und/oder entlang der Achse des Fahrzeuges miteinander verbunden sind, besteht, wobei Seitenwände jedes Behälters mit Einrichtung zum Befestigen, die in Gruppen von mindestens zwei an den Behälterseitenwänden angebrachten Führungsverriegelungen vorgesehen ist und als Vorsprünge in der Form einer abgeschnittenen vielflächigen Pyramide mit einer an die entsprechende Wand angrenzenden Fläche ausgeführt ist und einen rechten Winkel mit der Basis im Behälterbodenbereich bilden, versehen werden, wobei jede Gruppe von Führungsverriegelungen, die sich auf jede Behälterseitenwand bezieht, zu einer Seite von der benachbarten vertikalen Ebene, die über die entsprechende horizontale Symmetrieachse des Behälters erweitert, versetzt ist, wobei die genannte Basis der abgeschnittenen Pyramide ein gleichschenkliges Trapez, das mit seiner kleineren Basis zur gegenüberliegenden Seitenwand und mit seiner Hauptbasis außerhalb des Behälters ausgerichtet ist, darstellt, wobei die Einrichtung zum Befestigen der Behälter um einen wahlweisen Eingriff von Behältern durch genannte Einrichtung unter Verwendung jeder Pyramidenseitenfläche, die angepasst sind, um mit entsprechenden Seitenflächen der benachbarten Behälterpyramiden in Eingriff gebracht zu werden, angeordnet sind, **dadurch gekennzeichnet, dass** das Gehäuse aus Behältern unterschiedlicher Größe besteht, und wobei die Einrichtung zum Befestigen der Behältereinheit an den Kofferraum als zwei Laschen (11), die an den gegenüberliegenden Seitenwänden des Koffers beabstandet und an diesem befestigt sind, durchgeführt ist, wobei an der freien Seite jeder Lasche mindestens ein Paar von Führungsverriegelungen (10) ähnlich den Schlössern an den Behälterseitenwänden vorgesehen ist, wobei das zur Befestigung der Endbehälter der Einheit mit genannten Laschen geeignet ist.

2. Die geteilte Behältereinheit nach Anspruch 1, **dadurch gekennzeichnet, dass** die Führungsverriegelungen von der Behältermittellinie entlang ihrer Seitenwände im Uhrzeigersinn verschoben sind, wenn der Behälter von oben gesehen wird.

3. Die geteilte Behältereinheit nach Anspruch 1, **dadurch gekennzeichnet, dass** die Führungsverriegelungen von der Behältermittellinie entlang ihrer Seitenwände gegen den Uhrzeigersinn verschoben sind, wenn der Behälter von oben gesehen wird.

4. Die geteilte Behältereinheit nach Anspruch 1, **dadurch gekennzeichnet, dass** die Seitenflächen der Führungsverriegelungen als Ebenen ausgeführt werden.

5. Die geteilte Behältereinheit nach Anspruch 1, **dadurch gekennzeichnet, dass** das Gehäuse aus Kunststoff hergestellt ist.

6. Die geteilte Behältereinheit nach Anspruch 1, **dadurch gekennzeichnet, dass** das Gehäuse aus Teppichboden hergestellt ist.

7. Die geteilte Behältereinheit nach Anspruch 1, **dadurch gekennzeichnet, dass** das Gehäuse aus texturiertem Material hergestellt ist.

## Revendications

1. Une unité des conteneurs composée pour placer des bagages dans un coffre de voiture, comprenant un logement, comprenant un fond, les parois latérales, un couvercle et un moyen de fixation au coffre de la voiture, dans laquelle le logement étant composé de conteneurs dans la forme de parallélépipèdes aux sommets ouverts interconnectés de manière amovible à travers et/ou le long de l'axe de la voiture, dans laquelle chaque paroi latérale du conteneur étant fournie avec des moyens de fixation fournis en groupes d'au moins deux verrous de guidage fixés aux parois latérales du conteneur et réalisés comme saillies sous la forme d'une pyramide tétraédrique tronquée avec une face adjacente à la paroi correspondante et faisant un angle droit avec la base située dans la zone inférieure du conteneur, dans laquelle chaque groupe de verrous de guidage relatives à chaque paroi latérale du conteneur étant décalé d'un côté à partir du plan vertical adjacent, s'étendant à travers l'axe horizontal de symétrie correspondant du conteneur, dans laquelle ladite base de pyramide tronquée représente un trapèze isocèle, orienté avec sa base mineure vers la paroi latérale opposée et avec sa base majeure vers l'extérieur du conteneur, dans laquelle les moyens de fixation des conteneurs sont placés de manière à assurer un engagement optionnel des conteneurs avec lesdits moyens aux faces latérales de chaque pyramide adaptées pour être en prise avec les faces latérales correspondantes des pyramides adjacentes du conteneur, **caractérisé en ce que** le logement est composé de conteneurs de tailles différentes, et **en ce qu'**un moyen de fixation du conteneur à un coffre de voiture est réalisé sous la forme de deux plaques (11) espacées sur les parois latérales opposées du coffre et attachées à celui-ci, dans laquelle sur le côté libre de chaque plaque au moins une paire de verrous (10) de guidage similaires aux verrous placés sur les parois latérales du conteneur sont adaptées pour fixer les conteneurs d'extrémité de l'unité avec lesdites plaques.

2. L'unité des conteneurs composée selon la revendication 1, **caractérisée en ce que** les verrous de guidage sont décalés de l'axe de symétrie du conteneur le long de ses parois latérales dans le sens horaire lorsque le conteneur est vu de dessus.

3. L'unité des conteneurs composée selon la revendication 1, **caractérisée en ce que** les verrous de guidage sont décalés de l'axe de symétrie du conteneur le long de ses parois latérales dans le sens antihoraire lorsque le conteneur est vu de dessus.

4. L'unité des conteneurs composée selon la revendication 1, **caractérisée en ce que** les faces latérales des verrous de guidage sont réalisées sous la forme de plans.

5. L'unité des conteneurs composée selon la revendication 1, **caractérisée en ce que** le logement est en plastique.

6. L'unité des conteneurs composée selon la revendication 1, **caractérisée en ce que** le logement est en moquette.

7. L'unité des conteneurs composée selon la revendication 1, **caractérisé en ce que** le logement est en matériau texturé.
